(19) Europäisches Patentamt
European Patent Office
Office européen des brevets

(11) **EP 4 773 043 A1**

(12) **EUROPEAN PATENT APPLICATION**

(43) Date of publication:
**08.07.2026 Bulletin 2026/28**

(21) Application number: **25195986.2**

(22) Date of filing: **14.08.2025**

(51) International Patent Classification (IPC):
**G06N 3/0455** (2023.01)　　**G06N 3/0475** (2023.01)
**G06T 11/00** (2026.01)　　**G06V 10/25** (2022.01)
**G06V 10/74** (2022.01)

(52) Cooperative Patent Classification (CPC):
**G06T 11/00; G06N 3/0455; G06N 3/0475;
G06V 10/25; G06V 10/761; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.01.2025 US 202519009706**

(71) Applicants:
• **Lemon Inc.**
  **Grand Cayman, KY1-1205 (KY)**
• **BEIJING YOUZHUJU NETWORK TECHNOLOGY
  CO. LTD.**
  **Beijing 101299 (CN)**

(72) Inventors:
• **Bai, Song**
  **018960 Singapore (SG)**
• **He, Ruifei**
  **Chaoyang District, Beijing, 100028 (CN)**
• **Xue, Chuhui**
  **018960 Singapore (SG)**
• **Zhang, Wenqing**
  **018960 Singapore (SG)**
• **Yu, Yingchen**
  **018960 Singapore (SG)**

(74) Representative: **Grünecker Patent- und
Rechtsanwälte
PartG mbB
Leopoldstraße 4
80802 München (DE)**

(54) **DEBIASING TEXT-TO-IMAGE DIFFUSION MODELS**

(57) There are provided methods, devices, and computer program products for image generation, particularly to debiasing text-to-image diffusion models. In a method, a plurality of images is obtained by an image generating model based on a prompt. The plurality of images comprises a plurality of instances of an object, respectively and the object is specified by the prompt. A plurality of attributes of the plurality of instances of the object are determined respectively. The image generating model is updated based on the plurality of attributes and a predetermined distribution of a plurality of predetermined attributes related to the object. With the above method, the images generated by the updated image generating model may follow the predetermined distribution, and the updated image generating model may output debiased results.

*FIG. 1*

**Description**

FIELD

The present disclosure generally relates to machine learning, and more specifically, to methods, devices and computer program products for image generation by debiasing text-to-image diffusion models.

BACKGROUND

Learning-based Text-to-Image (TTI) models have become a trend in prompted image generation. These models take a natural language as an input prompt, and output images consistent with the prompt. However, recent works point out that these generated images may exhibit bias. It is expected to resolve the bias in the TTI models.

SUMMARY

In a first aspect of the present disclosure, there is provided a method for image generation. In the method, a plurality of images is obtained by an image generating model based on a prompt. The plurality of images comprises a plurality of instances of an object, respectively, and the object is specified by the prompt. A plurality of attributes of the plurality of instances of the object are determined respectively. The image generating model is updated based on the plurality of attributes and a predetermined distribution of a plurality of predetermined attributes related to the object.

In a second aspect of the present disclosure, there is provided an electronic device. The electronic device comprises: a computer processor coupled to a computer-readable memory unit, the memory unit comprising instructions that when executed by the computer processor implements a method according to the first aspect of the present disclosure.

In a third aspect of the present disclosure, there is provided a computer program product, the computer program product comprising a computer readable storage medium having program instructions embodied therewith, the program instructions executable by an electronic device to cause the electronic device to perform a method according to the first aspect of the present disclosure.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

BRIEF DESCRIPTION OF THE SEVERAL VIEWS OF THE DRAWINGS

Through the more detailed description of some implementations of the present disclosure in the accompanying drawings, the above and other objects, features and advantages of the present disclosure will become more apparent, wherein the same reference generally refers to the same components in the implementations of the present disclosure.

Fig. 1 illustrates a schematic diagram of an inference process of a TTI system;
Fig. 2 illustrates an example diagram of image generation according to implementations of the present disclosure;
Fig. 3 illustrates a schematic diagram of updating an image generating model according to implementations of the present disclosure;
Fig. 4 illustrates a schematic diagram of determining a plurality of attributes of a plurality of instances according to implementations of the present disclosure;
Fig. 5A illustrates a schematic diagram of a first algorithm for determining a weight vector according to implementations of the present disclosure;
Fig. 5B illustrates a schematic diagram of a second algorithm for determining a weight vector according to implementations of the present disclosure;
Fig. 6 illustrates a schematic diagram of bias for images generated by the image generating model according to implementations of the present disclosure;
Fig. 7 illustrates a schematic diagram of a distribution determined by respective frequencies of respective predetermined attributes according to implementations of the present disclosure;
Fig. 8 illustrates an example flowchart of a method for image generation according to implementations of the present disclosure; and
Fig. 9 illustrates a block diagram of a computing device in which various implementations of the present disclosure can be implemented.

DETAILED DESCRIPTION

Principle of the present disclosure will now be described with reference to some implementations. It is to be understood that these implementations are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one implementation," "an implementation," "an example implementation," and the like indicate that the implementation described may include a particular feature, structure, or characteristic, but it is not necessary that every implementation includes the particular feature, structure, or characteristic. Moreover, such phrases are not necessarily referring to the same implementation. Further, when a particular feature, structure, or characteristic is described in connection with an example implementation, it is submitted that it is within the knowledge of one skilled in the art to affect such feature, structure, or characteristic in connection with other implementations whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example implementations. As used herein, the term "and/or" includes any and all combinations of one or more of the listed terms.

The terminology used herein is for the purpose of describing particular implementations only and is not intended to be limiting of example implementations. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

Principle of the present disclosure will now be described with reference to some implementations. It is to be understood that these implementations are described only for the purpose of illustration and help those skilled in the art to understand and implement the present disclosure, without suggesting any limitation as to the scope of the disclosure. The disclosure described herein can be implemented in various manners other than the ones described below. In the following description and claims, unless defined otherwise, all technical and scientific terms used herein have the same meaning as commonly understood by one of ordinary skills in the art to which this disclosure belongs.

It may be understood that data involved in the present technical solution (including but not limited to the data itself, the acquisition or use of the data) should comply with requirements of corresponding laws and regulations and relevant rules.

It may be understood that, before using the technical solutions disclosed in various implementations of the present disclosure, the user should be informed of the type, scope of use, and use scenario of the personal information involved in the present disclosure in an appropriate manner in accordance with relevant laws and regulations, and the user's authorization should be obtained.

For example, in response to receiving an active request from the user, prompt information is sent to the user to explicitly inform the user that the requested operation will need to acquire and use the user's personal information. Therefore, the user may independently choose, according to the prompt information, whether to provide the personal information to software or hardware such as electronic devices, applications, servers, or storage media that perform operations of the technical solutions of the present disclosure.

As an optional but non-limiting implementation, in response to receiving an active request from the user, the way of sending prompt information to the user, for example, may include a pop-up window, and the prompt information may be presented in the form of text in the pop-up window. In addition, the pop-up window may also carry a selection control for the user to choose "agree" or "disagree" to provide the personal information to the electronic device.

It may be understood that the above process of notifying and obtaining the user authorization is only illustrative and does not limit the implementation of the present disclosure. Other methods that satisfy relevant laws and regulations are also applicable to the implementation of the present disclosure.

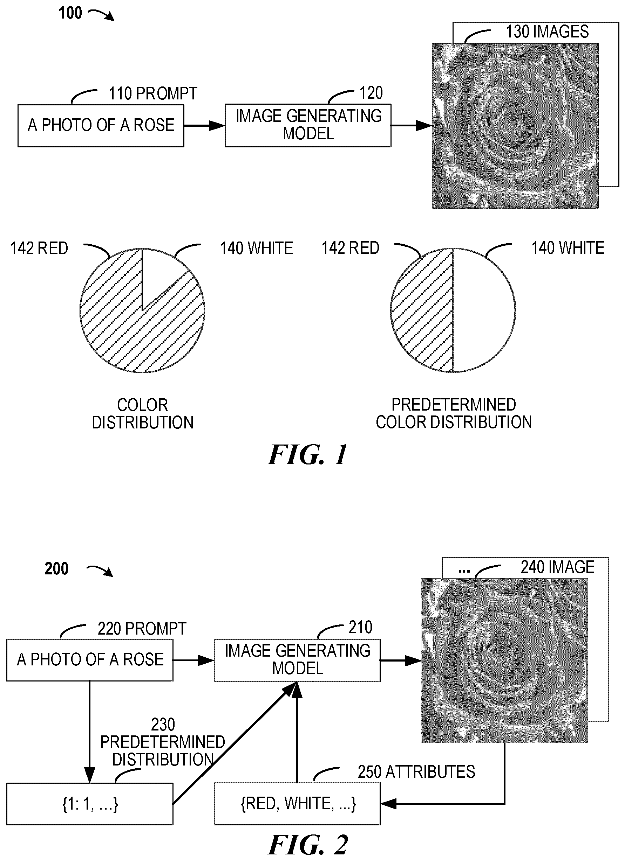

As briefly mentioned above, bias exists in current TTI systems. The bias will be described with reference to Fig. 1, which illustrates a schematic diagram 100 of an inference process of a TTI system. As shown in Fig.1, an image generating model 120 (as an example of the TTI system) may generate a plurality of images 130 based on a prompt 110. In an example, the prompt 110 may include "a photo of a rose" and the images 130 generated by the image generating model 120 may be roses. The color distribution of the roses in the images 130 may indicate that the probability of red 142 (e.g., 85%) is much higher than the probability of white 140 (e.g., 15%). Supposing the ratio of red to white is 1:1 in the natural world, therefore, there is a bias for the color of the rose. It is expected that the image generating model 120 may generate roses according to a predetermined color distribution (e.g., the ratio of red to white is 1:1).

It is to be noted that the content of the prompt 110 is not limited in implementations of the present disclosure. For example, the prompt 110 may include "please generate a photo of panda", etc. It is also to be noted that the bias existed in the color of the rose is merely an example and there may be bias in other attributes of an object.

In the field of text-to-image generation, diffusion models have recently emerged as a class of promising and powerful generative models. As a likelihood-based model, the diffusion model matches the underlying data distribution $q(x_0)$ by learning to reverse a noising process, and thus images can be sampled from a prior Gaussian distribution via the learned reverse path. In particular, text-to-image generation may be treated as a conditional image generation task that requires the sampled image to match the given natural language description. Based upon the formulation of the diffusion model, several text-to-image models deliver high synthesis quality. However, no related work has formally addressed the problem of bias in TTI diffusion models.

In view of the above, the present disclosure proposes a solution for image generation with reference to Fig. 2, which illustrates an example diagram 200 of image generation according to implementations of the present disclosure. As illustrated in Fig. 2, a plurality of images 240 (e.g., images of roses) are obtained by an image generating model 210 based on a prompt 220 (e.g., "a photo of a rose"). The plurality of images 240 comprises a plurality of instances of an object (e.g., rose), respectively. The object is specified by the prompt 220. A plurality of attributes 250 (e.g., color of the rose) of the plurality of instances of the object are determined respectively. The image generating model 210 is updated based on the plurality of attributes 250 and a predetermined distribution 230 (e.g., the ratio of red to white is 1:1) of a plurality of predetermined attributes related to the object. It is to be noted that the rose is merely an example of the object, and the object may include plants, animals, people and the like.

With these implementations of the present disclosure, the images generated by the updated image generating model may follow the predetermined distribution. In this way, the updated image generating model may redistribute a distribution of an attribute of an object to a balanced distribution, thereby achieving promising debiasing results.

The denoising diffusion probabilistic model (DDPM) employs a noise-injection process, also known as the forward process, to generate data from noise. This process involves gradually introducing noise into the original clean data (represented as $x_0$) and then reversing this process to generate data from the injected noise. Given a sample from the data distribution $x_0 \sim q(x_0)$, a forward process $q(\mathrm{x}_{1:T} \mid \mathrm{x}_0) = \prod_{t=1}^{T} q(\mathrm{x}_t \mid \mathrm{x}_{t-1})$ progressively perturbs the data with Gaussian kernels:

$$q(\mathrm{x}_t \mid \mathrm{x}_{t-1}) := \mathcal{N}\left(\sqrt{1 - \beta_t}\, \mathrm{x}_{t-1}, \beta_t \mathrm{I}\right) \qquad (1)$$

As can be seen from Eq. (1), noisy latent variables $x_1, x_2, \ldots, x_T$ are produced. $x_T$ may be directly sampled from $x_0$ due to the following closed form:

$$q(\mathrm{x}_t \mid \mathrm{x}_0) = \mathcal{N}\left(\mathrm{x}_t; \sqrt{\bar{\alpha}_t}\mathrm{x}_0, (1 - \bar{\alpha}_t)\mathrm{I}\right) \qquad (2)$$

For the reverse process, started from an initial noise map $x_T \sim p(x_T) = \mathcal{N}(0, \mathrm{I})$, new images may be then generated via iteratively sampling from $p_\theta(x_{t-1}|x_t)$ using the following equation:

$$\mathrm{x}_{t-1} = \frac{1}{\sqrt{\alpha_t}}\left(\mathrm{x}_t - \frac{\beta_t}{\sqrt{1 - \bar{\alpha}_t}}\epsilon_\theta(\mathrm{x}_t, t)\right) + \sigma_t \mathrm{z} \qquad (3)$$

where $z \sim \mathcal{N}(0, \mathrm{I})$.

The text-to-image diffusion model extends the basic unconditional diffusion model by changing the target distribution $q(x_0)$ into a conditional one $q(x_0|c)$, where $c$ is a natural language description.

A diffusion model (e.g., as a component of the image generating model 210) that generates images from an input noise latent vector $z$, a text prompt $p$ may be considered. It is expected to resolve its bias with respect to a certain bias evaluation perspective, e.g., color. It is assumed that there are $n$ evaluation attributes, with their text description encoded by a text encoder given by $\{g_0, \ldots, g_{n-1}\}$. Given a text prompt $p$, it is expected to produce an unbiased TTI system that may generate images with a uniform distribution across the given evaluation attributes.

In implementations of the present disclosure, a loss may be obtained based on a distribution of the plurality of attributes and the predetermined distribution of the plurality of predetermined attributes. The image generating model 210 may be updated based on the loss. In an example, the distribution of the plurality of attributes may indicate the actual distribution of the plurality of attributes for the instance in images generated by the image generating model 210. Taking colors of the rose as an example of attributes for the instance in images, the ratio of the distribution of red to the distribution of white is 4:1.

In order to resolve the bias (e.g., the distribution of red is much higher than the distribution of white), the inappropriate content generated by diffusion models may be reduced. To influence the diffusion process, an inappropriate concept (as an example of a distribution guidance parameter) in addition to the text prompt may be defined which moves the unconditioned score estimate towards the prompt conditioned estimate and simultaneously away from the inappropriate concept conditioned estimate. Inference of stable diffusion is usually represented as follows:

$$\tilde{\epsilon}_\theta\big(z_t, c_p\big) := \epsilon_\theta\big(z_t\big) + s_g\left(\epsilon_\theta\big(z_t, c_p\big) - \epsilon_\theta\big(z_t\big)\right) \tag{4}$$

where $c_p$ represents the text condition.

Different from the inference of stable diffusion, an inappropriate concept is added via textual description $S$ and another conditioned estimate $\varepsilon_\theta(z_t, c_S)$ is obtained. Therefore, the adjusted inference estimates become as follows:

$$\tilde{\epsilon}_\theta\big(z_t, c_p, c_S\big) := \epsilon_\theta\big(z_t\big) + s_g\left(\epsilon_\theta\big(z_t, c_p\big) - \epsilon_\theta\big(z_t\big) - \gamma\big(z_t, c_p, c_S\big)\right) \tag{5}$$

In Eq. (5), $c_S$ represents the distribution guidance parameter and Eq. (5) may be regarded as the loss for updating the image generating model 210. As a result, the possibility of generating inappropriate content may be reduced. Based on Eq. (5), the generation in a certain direction is reduced. Furthermore, different text descriptions defined by target attributes with different weights may be combined with Eq. (5), which is further used by the image generating model 210 to guide the generation of bias-free samples.

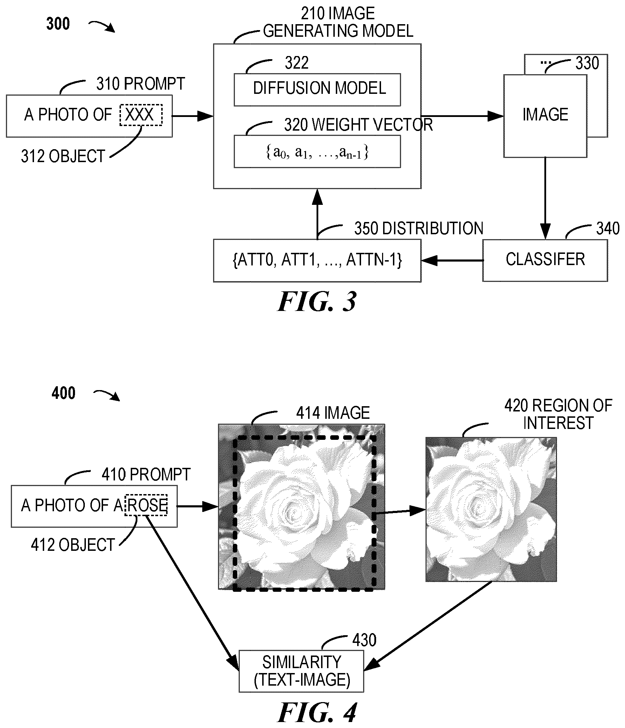

Fig. 3 illustrates a schematic diagram of updating the image generating model 210 according to implementations of the present disclosure. As shown in Fig. 3, the image generating model 210 may comprise a diffusion model 322 and a distribution guidance parameter for adjusting the diffusion model. The image generating model 210 may generate a plurality of images 330 based on a prompt 310 which specifies an object 312. A classifier 340 may determine a distribution 350 of the plurality of attributes for instances of the object 312 in the images 330. The distribution guidance parameter may comprise a weight vector 320, and a plurality of weights in the weight vector 320 corresponds to the plurality of predetermined attributes respectively. The loss may be determined based on the weight vector 320, the distribution 350 of the plurality of attributes and the predetermined distribution of the plurality of predetermined attributes. In this way, the image generating model 210 may be updated toward the direction for aligning the distribution 350 to the predetermined distribution, and thus the updated image generating model may generate debiasing results.

In some examples, weights $a = \{a_0, ..., a_{n-1}\}$ (representing the weights in the weight vector 320) may be used as coefficients for text latent vectors $\{g_0, ..., g_{n-1}\}$ (representing the plurality of predetermined attributes) to obtain a vector as a multi-directional guidance (as an example of the distribution guidance parameter) as follows:

$$u = \sum_{i=0}^{n} a_i\, g_i \tag{6}$$

Eq. (6) may be used to replace the distribution guidance parameter $c_S$ in Eq. (5). Then, the updated Eq. (5) may be regarded as the loss to update the image generating model 210. The goal of the present disclosure is to optimize $a$ to achieve the balance between various attributes and generate bias-free samples.

In implementations of the present disclosure, a distribution vector may be determined based on the weight vector 320 and the plurality of attributes of the plurality of instances. In some examples, to simplify the diffusion mapping process from input variables $\{z, p, u\}$ to the final output, the processes of softmax-normalization for $a$, latent vector generation, and guided diffusion may be treated as a black-box mapping. This mapping takes the input weight vector $a = \{a_0, ..., a_{n-1}\}$ and produces the class-wise frequency statistics $s \in \mathbb{R}_+^n$. This mapping may be represented as follows:

$$s = \text{Black} - \text{Box}(a) \tag{7}$$

In Eq. (7), Black - Box($\cdot$) represents the image generating model 210 and s represents the distribution vector.

After the distribution vector is determined, the loss may be determined based on a distance between the distribution vector and the predetermined distribution of the plurality of predetermined attributes. In some examples, to evaluate the performance of this mapping, a loss function may be defined using the KL divergence between the normalized frequency vector (also referred to as the distribution vector) s and a uniform distribution (as an example of the predetermined distribution of the plurality of predetermined attributes) as follows:

$$E(s) = D_{KL}\big(\bar{s}, U(n)\big) = \sum_i^n \bar{s}_i \log(n * \bar{s}_i) \qquad (8)$$

In Eq. (8), $E(s)$ represents the distance between the distribution vector and the predetermined distribution, $\bar{s}$ represents the normalized frequency vector of s, $\bar{s}_i = \frac{\bar{s}_i}{\sum_j s_j}$, and U(n) represents uniform distribution with n values of equal probability 1/n.

In some implementations, the weight vector 320 for updating the diffusion model may be determined by minimizing the loss. In an example, the optimal weight vector $a^*$ that minimizes the loss function may be determined as follows:

$$a^* = \operatorname*{argmin}_a \ E\big(\text{Black-Box}(a)\big) \qquad (9)$$

Fig. 4 illustrates a schematic diagram 400 of determining the plurality of attributes of the plurality of instances according to implementations of the present disclosure. As shown in Fig. 4, an image 414 may be generated based on a prompt 410 which specifies an object 412. With respect to an instance in an image (e.g. image 414) in the plurality of images: a region of interest 420 may be detected based on image recognition, a plurality of similarities 430 may be determined between an image content in the region of interest 420 and the plurality of predetermined attributes related to the object 412, and the attribute of the instance may be determined based on the plurality of similarities. In some examples, an object detector may be used to crop out the region of interest 420 (e.g., the rose region) of the image 410 to exclude the interference of background for better classification. Then, the cosine similarity (e.g., the similarities 430) between cropped images (e.g., the region of interest 420) with text descriptions (e.g., text descriptions of the object 412) of different groups. As a result, the attribute of the instance of the object 412 may be determined based on the similarities 430. With these implementations, the interference of background of the image is removed and key information of the image is reserved. In this way, the accuracy of the attribute of the instance of the object may be improved.

In implementations of the present disclosure, a weight vector space with a center at an initial weight vector may be determined and the weight vector space may comprise a plurality of weight vectors that follow a predetermined distribution. A group of weight vectors may be selected from the plurality of weight vectors and a group of rewards for the image generating model 210 may be determined based on the loss and the group of weight vectors. Then, the weight vector 320 may be determined by updating the initial weight vector with the group of rewards. To optimize the image generating model 210, a distribution (also referred to as the weight vector space) $\pi_A$ with parameters $A \in \mathbb{R}^n$ may be instantiated and a may be sampled from this distribution, denoted as $a \sim \pi_A$. The distribution $\pi_A$ may be formed using a Gaussian function centered at $A$ (as an example of the initial weight vector). Treating all variables independently, $\pi_A$ may be expressed as:

$$\pi_A(a) = \prod_i^n G\left([A]_i, 1\right) \qquad (10)$$

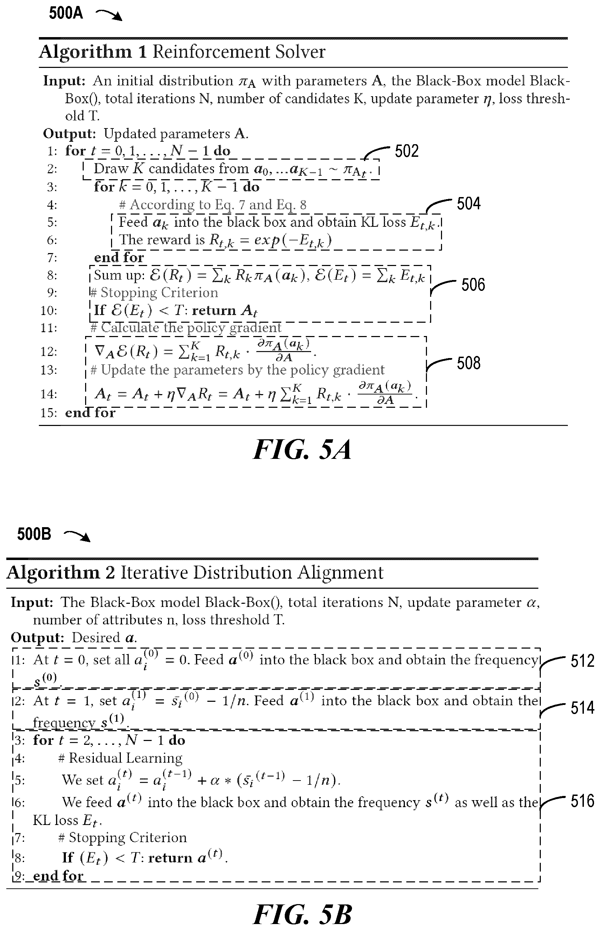

In Eq. (10), $G([A]_i, 1)$ represents a Gaussian distribution with a mean of $[A]_i$ and a standard deviation of 1. The elements of A are randomly initialized. The above process of determining the weight vector 320 may be described with reference to Fig. 5A, which illustrates a schematic diagram 500A of a first algorithm for determining the weight vector according to implementations of the present disclosure. As shown in Fig. 5A, at code segment 502, for each iteration indexed by $t$, $K$ candidates (e.g., a group of weight vectors) $a_0, \dots, a_{K-1}$ may be drew from $\pi_{A_t}$. At code segment 504, for each candidate $a_k$, it may be fed into the black box and the reward $R_{t,k} = \exp(-E_{t,k})$ may be obtained. At code segment 506, the loss and reward for all candidates are collected. The stopping criterion of the algorithm is when the collected loss is below a pre-defined threshold T. At code segment 508, the policy gradient may be computed and the parameters (also referred to as the initial weight vector) may be updated.

To improve the stability and reduce the variance of the first algorithm, the following techniques may be applied. Firstly, a momentum term may be used. Then, it is ensured that $R_{t,1}, \dots, R_{t,k}$ have a zero mean. By doing so, modified update rule for the parameters may be expressed as follows:

$$A_t = A_t + \eta \sum_{k=1}^{K} \left( R_{t,k} - v_t \right) \cdot \frac{\partial \pi_A(a_k)}{\partial A} \tag{11}$$

In Eq. (11), $v_t$ indicates the minimum or the mean reward at the t-th step.

In implementations of the present disclosure, the weight vector 320 comprised in the image generating model 210 may be set to an initial weight vector and the distribution vector may be determined based on the image generating model 210 that comprises the weight vector 320. Then, the weight vector 320 may be updated based on the loss that is determined based on the distribution vector and the predetermined distribution of the plurality of predetermined attributes. The above process of updating the weight vector 320 may be described with reference to Fig. 5B, which illustrates a schematic diagram 500B of a second algorithm for determining the weight vector according to implementations of the present disclosure.

As shown in Fig. 5B, in each iteration except the first one, the residual from the frequency (also referred to as the distribution vector) of the last iteration to the uniform value (as an example of the predetermined distribution) is used as an update clue. This punishes the attributes that have above-average frequency since they are recognized as unsafe directions, while below-average attributes would be encouraged. Specifically, at code segment 512, the weight vector 320 may be set to the initial weight vector (e.g., 0). At code segment 514, the distribution vector may be determined based on the image generating model 210 (also referred to as the block box). At code segment 516, the weight vector 320 may be updated based on the loss. The loss may be determined based on the distribution vector (e.g., denoted as $\bar{s}_i^{t-1}$) and the predetermined distribution of the plurality of predetermined attributes (e.g., denoted as 1/n). In this way, with only 1-3 iterations, the KL divergence may be largely reduced, and the weight vector may be quickly determined. Therefore, the performance of the image generating model may be improved.

In implementations of the present disclosure, in at least one round, in response to determining that the loss determined based on the updated weight vector does not meet a stopping criterion, the weight vector may be updated based on a difference between the distribution vector and the predetermined distribution. At code segment 516, by feeding the updated weight vector into the black box, a loss (e.g., a KL loss, denoted as $E_t$) may be obtained. If the loss does not meet a stopping criterion (denoted as $T$), the weight vector may be continued to be updated based the difference between the distribution vector and the predetermined distribution.

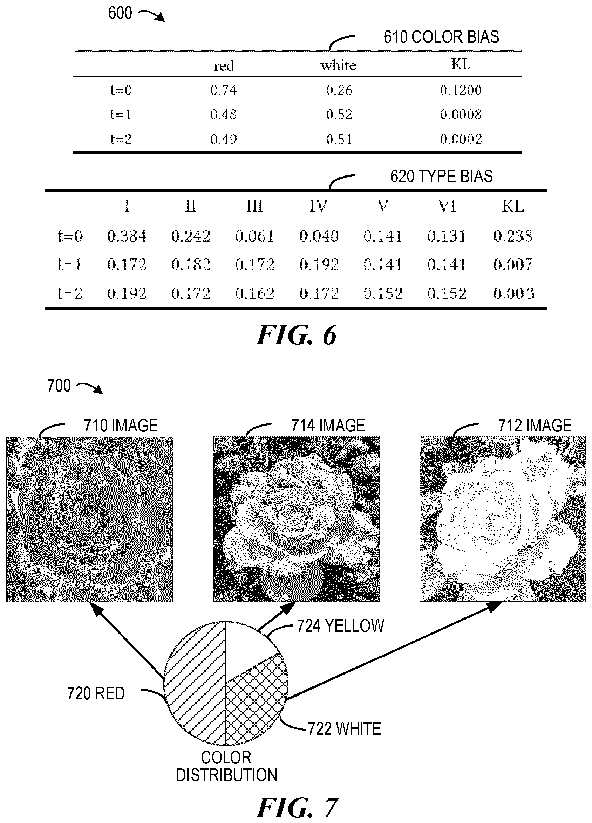

The outcome of the second algorithm may be described with reference to Fig. 6, which illustrates a schematic diagram 600 of bias for images generated by the image generating model 210 according to implementations of the present disclosure. Supposing the red and white colors follow uniform distribution, as shown in table of color bias 610 in Fig. 6, the original distribution ($t = 0$) has a bias towards red. After iteration $t = 1$, the proposed second algorithm makes the color bias is almost eliminated, with 48 % of red and 52 % of white. The KL divergence significantly reduces from 0.12 to 0.0008. One more iteration leads to better debiasing results. Furthermore, supposing roses have six types: type I, II, III, IV, V and VI, and these types follow uniform distribution. As shown in the table of type bias 620, the original distribution ($t = 0$) has a bias towards type I and II. With only one iteration, the proposed second algorithm largely reduces the KL divergence from 0.238 to 0.007, making the biased distribution shift to a uniform one. With another iteration, the KL divergence is improved to 0.003. In this way, only 1 to 3 iterations are needed to achieve convergence and usually only a single iteration may achieve promising results.

In implementations of the present disclosure, the predetermined distribution of the plurality of predetermined attributes may be determined by a uniform distribution. For example, the plurality of predetermined attributes are three colors for an object and the predetermined distribution for each color is 1/3.

Alternatively, or in addition, the predetermined distribution of the plurality of predetermined attributes may be determined by a distribution determined by respective frequencies of respective predetermined attributes among the plurality of predetermined attributes. Fig. 7 illustrates a schematic diagram 700 of a distribution determined by respective frequencies of respective predetermined attributes according to implementations of the present disclosure. As shown in Fig. 7, the color distribution may be determined by respective frequencies (e.g., 3:2:1) of respective predetermined attributes (e.g., red 720 for the image 710, white 722 for the image 712 and yellow 724 for the image 714). In this way, the predetermined distribution may be flexibly defined and the generated images may follow any predetermined distribution.

In implementations of the present disclosure, a target prompt may be input into the image generating model. The target prompt may instruct the image generating model to generate a target image that comprises a target object and the target object may be specified in the prompt. The target image may be received from the image generating model. After the image generating model is trained, the image generating model may generate bias-free images. The distribution of attributes of the target object in the target image may follow a real distribution of attributes of the target object.

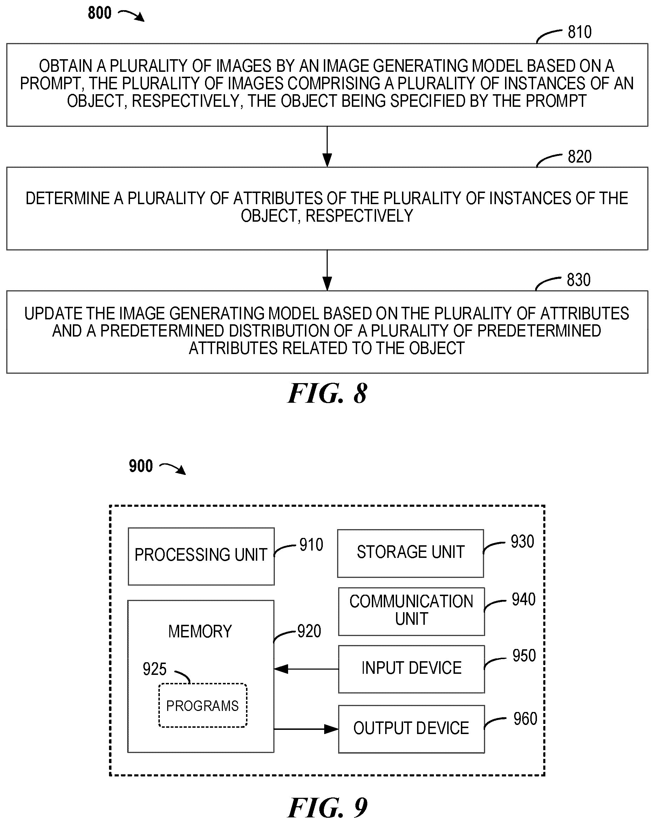

The above paragraphs have described details for image generation. According to implementations of the present disclosure, a method is provided for image generation. Reference will be made to Fig. 8 for more details about the method, where Fig. 8 illustrates an example flowchart of a method 800 for image generation according to implementations of the present disclosure. At block 810, a plurality of images are obtained by an image generating model based on a prompt. The plurality of images comprises a plurality of instances of an object, respectively and the object is specified by the prompt. At block 820, a plurality of attributes of the plurality of instances of the object are determined respectively. At block 830, the image generating model is updated based on the plurality of attributes and a predetermined distribution of a plurality of predetermined attributes related to the object.

In implementations of the present disclosure, updating the image generating model comprises: obtaining a loss based on a distribution of the plurality of attributes and the predetermined distribution of the plurality of predetermined attributes; and updating the image generating model based on the loss.

In implementations of the present disclosure, the image generating model comprises a diffusion model and a distribution guidance parameter for adjusting the diffusion model, the distribution guidance parameter comprises a weight vector, and a plurality of weights in the weight vector corresponding to the plurality of predetermined attributes respectively, and obtaining the loss comprises: determining the loss based on the weight vector, the distribution of the plurality of attributes, and the predetermined distribution of the plurality of predetermined attributes.

In implementations of the present disclosure, determining the loss comprises: determining a distribution vector based on the weight vector and the plurality of attributes of the plurality of instances; and determining the loss based on a distance between the distribution vector and the predetermined distribution of the plurality of predetermined attributes.

In implementations of the present disclosure, updating the image generating model based on the loss comprises: determining the weight vector for updating the diffusion model by minimizing the loss.

In implementations of the present disclosure, determining weight vector comprises: setting the weight vector comprised in the image generating model to an initial weight vector; determining the distribution vector based on the image generating model that comprises the weight vector; and updating the weight vector based on the loss that is determined based on the distribution vector and the predetermined distribution of the plurality of predetermined attributes.

In implementations of the present disclosure, updating the weight vector based on the distribution vector comprises: in at least one round, in response to determining that the loss determined based on the updated weight vector does not meet a stopping criterion, updating the weight vector based on a difference between the distribution vector and the predetermined distribution.

In implementations of the present disclosure, determining the weight vector comprises: determining a weight vector space with a center at an initial weight vector, the weight vector space comprises a plurality of weight vectors that follow a predetermined distribution; selecting a group of weight vectors from the plurality of weight vectors; determining a group of rewards for the image generating model based on the loss and the group of weight vectors; and determining the weight vector by updating the initial weight vector with the group of rewards.

In implementations of the present disclosure, determining the plurality of attributes of the plurality of instances comprises: with respect to an instance in an image in the plurality of images: detecting a region of interest from the image based on image recognition; determining a plurality of similarities between an image content in the region of interest and the plurality of predetermined attributes related to the object; and determining the attribute of the instance based on the plurality of similarities.

In implementations of the present disclosure, the predetermined distribution of the plurality of predetermined attributes is determined by any of: a uniform distribution; or a distribution determined by respective frequencies of respective predetermined attributes among the plurality of predetermined attributes.

The method 800 further comprises: inputting a target prompt into the image generating model, the target prompt instructing the image generating model to generate a target image that comprises a target object, and the target object being specified in the prompt; and receiving the target image from the image generating model.

According to implementations of the present disclosure, an apparatus is provided for image generation. The apparatus comprises: an image obtaining module configured to obtain a plurality of images by an image generating model based on a prompt, the plurality of images comprising a plurality of instances of an object, respectively, the object being specified by the prompt; an attribute determining module configured to determine a plurality of attributes of the plurality of instances of the object, respectively; and an image generating model updating module configured to update the image generating model based on the plurality of attributes and a predetermined distribution of a plurality of predetermined attributes related to the object.

According to implementations of the present disclosure, an electronic device is provided for implementing the method 800. The electronic device comprises: a computer processor coupled to a computer-readable memory unit, the memory unit comprising instructions that when executed by the computer processor implements a method for data classification. The method comprises: obtaining a plurality of images by an image generating model based on a prompt, the plurality of images comprising a plurality of instances of an object, respectively, the object being specified by the prompt; determining a plurality of attributes of the plurality of instances of the object, respectively; and updating the image generating model based on the plurality of attributes and a predetermined distribution of a plurality of predetermined attributes related to the object.

In implementations of the present disclosure, updating the image generating model comprises: obtaining a loss based on a distribution of the plurality of attributes and the predetermined distribution of the plurality of predetermined attributes; and updating the image generating model based on the loss.

In implementations of the present disclosure, the image generating model comprises a diffusion model and a distribution guidance parameter for adjusting the diffusion model, the distribution guidance parameter comprises a weight vector, and a plurality of weights in the weight vector corresponding to the plurality of predetermined attributes respectively, and obtaining the loss comprises: determining the loss based on the weight vector, the distribution of the plurality of attributes, and the predetermined distribution of the plurality of predetermined attributes.

In implementations of the present disclosure, determining the loss comprises: determining a distribution vector based on the weight vector and the plurality of attributes of the plurality of instances; and determining the loss based on a distance between the distribution vector and the predetermined distribution of the plurality of predetermined attributes.

In implementations of the present disclosure, updating the image generating model based on the loss comprises: determining the weight vector for updating the diffusion model by minimizing the loss.

In implementations of the present disclosure, determining weight vector comprises: setting the weight vector comprised in the image generating model to an initial weight vector; determining the distribution vector based on the image generating model that comprises the weight vector; and updating the weight vector based on the loss that is determined based on the distribution vector and the predetermined distribution of the plurality of predetermined attributes.

In implementations of the present disclosure, updating the weight vector based on the distribution vector comprises: in at least one round, in response to determining that the loss determined based on the updated weight vector does not meet a stopping criterion, updating the weight vector based on a difference between the distribution vector and the predetermined distribution.

In implementations of the present disclosure, determining the weight vector comprises: determining a weight vector space with a center at an initial weight vector, the weight vector space comprises a plurality of weight vectors that follow a predetermined distribution; selecting a group of weight vectors from the plurality of weight vectors; determining a group of rewards for the image generating model based on the loss and the group of weight vectors; and determining the weight vector by updating the initial weight vector with the group of rewards.

In implementations of the present disclosure, determining the plurality of attributes of the plurality of instances comprises: with respect to an instance in an image in the plurality of images: detecting a region of interest from the image based on image recognition; determining a plurality of similarities between an image content in the region of interest and the plurality of predetermined attributes related to the object; and determining the attribute of the instance based on the plurality of similarities.

In implementations of the present disclosure, the predetermined distribution of the plurality of predetermined attributes is determined by any of: a uniform distribution; or a distribution determined by respective frequencies of respective predetermined attributes among the plurality of predetermined attributes.

The method 800 further comprises: inputting a target prompt into the image generating model, the target prompt instructing the image generating model to generate a target image that comprises a target object, and the target object being specified in the prompt; and receiving the target image from the image generating model.

According to implementations of the present disclosure, a computer program product is provided, the computer program product comprising a computer readable storage medium having program instructions embodied therewith, the program instructions executable by an electronic device to cause the electronic device to perform the method 800.

Fig. 9 illustrates a block diagram of a computing device 900 in which various implementations of the present disclosure can be implemented. It would be appreciated that the computing device 900 shown in Fig. 9 is merely for purpose of illustration, without suggesting any limitation to the functions and scopes of the present disclosure in any manner. The computing device 900 may be used to implement the above method 800 in implementations of the present disclosure. As shown in Fig. 9, the computing device 900 may be a general-purpose computing device. The computing device 900 may at least comprise one or more processors or processing units 910, a memory 920, a storage unit 930, one or more communication units 940, one or more input devices 950, and one or more output devices 960.

The processing unit 910 may be a physical or virtual processor and can implement various processes based on programs 925 stored in the memory 920. In a multi-processor system, multiple processing units execute computer executable instructions in parallel so as to improve the parallel processing capability of the computing device 900. The processing unit 910 may also be referred to as a central processing unit (CPU), a microprocessor, a controller, or a microcontroller.

The computing device 900 typically includes various computer storage medium. Such medium can be any medium accessible by the computing device 900, including, but not limited to, volatile and non-volatile medium, or detachable and non-detachable medium. The memory 920 can be a volatile memory (for example, a register, cache, Random Access Memory (RAM)), a non-volatile memory (such as a Read-Only Memory (ROM), Electrically Erasable Programmable Read-Only Memory (EEPROM), or a flash memory), or any combination thereof. The storage unit 930 may be any detachable or non-detachable medium and may include a machine-readable medium such as a memory, flash memory drive, magnetic disk, or another other media, which can be used for storing information and/or data and can be accessed in the computing device 900.

The computing device 900 may further include additional detachable/ non-detachable, volatile/non-volatile memory medium. Although not shown in Fig. 9, it is possible to provide a magnetic disk drive for reading from and/or writing into a detachable and non-volatile magnetic disk and an optical disk drive for reading from and/or writing into a detachable non-volatile optical disk. In such cases, each drive may be connected to a bus (not shown) via one or more data medium interfaces.

The communication unit 940 communicates with a further computing device via the communication medium. In addition, the functions of the components in the computing device 900 can be implemented by a single computing cluster or multiple computing machines that can communicate via communication connections. Therefore, the computing device 900 can operate in a networked environment using a logical connection with one or more other servers, networked personal computers (PCs) or further general network nodes.

The input device 950 may be one or more of a variety of input devices, such as a mouse, keyboard, tracking ball, voice-input device, and the like. The output device 960 may be one or more of a variety of output devices, such as a display, loudspeaker, printer, and the like. By means of the communication unit 940, the computing device 900 can further communicate with one or more external devices (not shown) such as the storage devices and display device, with one or more devices enabling the user to interact with the computing device 900, or any devices (such as a network card, a modem, and the like) enabling the computing device 900 to communicate with one or more other computing devices, if required. Such communication can be performed via input/output (I/O) interfaces (not shown).

In some implementations, instead of being integrated in a single device, some, or all components of the computing device 900 may also be arranged in cloud computing architecture. In the cloud computing architecture, the components may be provided remotely and work together to implement the functionalities described in the present disclosure. In some implementations, cloud computing provides computing, software, data access and storage service, which will not require end users to be aware of the physical locations or configurations of the systems or hardware providing these services. In various implementations, the cloud computing provides the services via a wide area network (such as Internet) using suitable protocols. For example, a cloud computing provider provides applications over the wide area network, which can be accessed through a web browser or any other computing components. The software or components of the cloud computing architecture and corresponding data may be stored on a server at a remote position. The computing resources in the cloud computing environment may be merged or distributed at locations in a remote data center. Cloud computing infrastructures may provide the services through a shared data center, though they behave as a single access point for the users. Therefore, the cloud computing architectures may be used to provide the components and functionalities described herein from a service provider at a remote location. Alternatively, they may be provided from a conventional server or installed directly or otherwise on a client device.

The functionalities described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out the methods of the subject matter described herein may be written in any combination of one or more programming languages. The program code may be provided to a processor or controller of a general-purpose computer, special purpose computer, or other programmable data processing apparatus such that the program code, when executed by the processor or controller, causes the functions/operations specified in the flowcharts and/or block diagrams to be implemented. The program code may be executed entirely or partly on a machine, executed as a stand-alone software package partly on the machine, partly on a remote machine, or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are illustrated in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

From the foregoing, it will be appreciated that specific implementations of the presently disclosed technology have been described herein for purposes of illustration, but that various modifications may be made without deviating from the scope of the disclosure. Accordingly, the presently disclosed technology is not limited except as by the appended claims.

Implementations of the subject matter and the functional operations described in the present disclosure can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, i.e., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media, and memory devices, including by way of example semiconductor memory devices, e.g., EPROM, EEPROM, and flash memory devices. The processor and the memory can be supplemented by, or incorporated in, special purpose logic circuitry.

It is intended that the specification, together with the drawings, be considered illustrative only, where illustrative means an example. As used herein, the use of "or" is intended to include "and/or", unless the context clearly indicates otherwise.

While the present disclosure contains many specifics, these should not be construed as limitations on the scope of any disclosure or of what may be claimed, but rather as descriptions of features that may be specific to particular implementations of particular disclosures. Certain features that are described in the present disclosure in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are illustrated in the drawings in a particular order, this should not be understood as requiring that such operations be performed in the particular order shown or in sequential order, or that all illustrated operations be performed, to achieve desirable results. Moreover, the separation of various system components in the implementations described in the present disclosure should not be understood as requiring such separation in all implementations. Only a few implementations and examples are described and other implementations, enhancements and variations can be made based on what is described and illustrated in the present disclosure.

**Claims**

1. A method (800) for image generation, comprises:

   obtaining (810) a plurality of images by an image generating model based on a prompt, the plurality of images comprising a plurality of instances of an object, respectively, the object being specified by the prompt;
   determining (820) a plurality of attributes of the plurality of instances of the object, respectively; and
   updating (830) the image generating model based on the plurality of attributes and a predetermined distribution of a plurality of predetermined attributes related to the object.

2. The method (800) of claim 1, wherein updating (830) the image generating model comprises:

   obtaining a loss based on a distribution of the plurality of attributes and the predetermined distribution of the plurality of predetermined attributes; and
   updating the image generating model based on the loss.

3. The method (800) of claim 2, wherein the image generating model comprises a diffusion model and a distribution guidance parameter for adjusting the diffusion model, the distribution guidance parameter comprises a weight vector, and a plurality of weights in the weight vector corresponding to the plurality of predetermined attributes respectively, and obtaining the loss comprises:
   determining the loss based on the weight vector, the distribution of the plurality of attributes, and the predetermined distribution of the plurality of predetermined attributes.

4. The method (800) of claim 3, wherein determining the loss comprises:

   determining a distribution vector based on the weight vector and the plurality of attributes of the plurality of instances; and
   determining the loss based on a distance between the distribution vector and the predetermined distribution of the plurality of predetermined attributes.

5. The method (800) of claim 4, wherein updating the image generating model based on the loss comprises: determining the weight vector for updating the diffusion model by minimizing the loss.

6. The method (800) of claim 5, wherein determining weight vector comprises:

   setting the weight vector comprised in the image generating model to an initial weight vector;
   determining the distribution vector based on the image generating model that comprises the weight vector; and
   updating the weight vector based on the loss that is determined based on the distribution vector and the predetermined distribution of the plurality of predetermined attributes.

7. The method (800) of claim 6, wherein updating the weight vector based on the distribution vector comprises: in at least one round,
   in response to determining that the loss determined based on the updated weight vector does not meet a stopping criterion, updating the weight vector based on a difference between the distribution vector and the predetermined distribution.

8. The method (800) of claim 5, wherein determining the weight vector comprises:

   determining a weight vector space with a center at an initial weight vector, the weight vector space comprises a plurality of weight vectors that follow a predetermined distribution;
   selecting a group of weight vectors from the plurality of weight vectors;
   determining a group of rewards for the image generating model based on the loss and the group of weight vectors;
   determining the weight vector by updating the initial weight vector with the group of rewards.

9. The method (800) of claim 1, wherein determining (820) the plurality of attributes of the plurality of instances comprises: with respect to an instance in an image in the plurality of images:

  detecting a region of interest from the image based on image recognition;
  determining a plurality of similarities between an image content in the region of interest and the plurality of predetermined attributes related to the object; and
  determining the attribute of the instance based on the plurality of similarities.

10. The method (800) of claim 6, wherein the predetermined distribution of the plurality of predetermined attributes is determined by any of:

  a uniform distribution; or
  a distribution determined by respective frequencies of respective predetermined attributes among the plurality of predetermined attributes.

11. The method (800) of claim 1, further comprises:

  inputting a target prompt into the image generating model, the target prompt instructing the image generating model to generate a target image that comprises a target object, and the target object being specified in the prompt; and
  receiving the target image from the image generating model.

12. An electronic device, comprising a computer processor coupled to a computer-readable memory unit, the memory unit comprising instructions that when executed by the computer processor implements a method for image generation, the method comprising:

  obtaining (810) a plurality of images by an image generating model based on a prompt, the plurality of images comprising a plurality of instances of an object, respectively, the object being specified by the prompt;
  determining (820) a plurality of attributes of the plurality of instances of the object, respectively; and
  updating (830) the image generating model based on the plurality of attributes and a predetermined distribution of a plurality of predetermined attributes related to the object.

13. The electronic device of claim 12, wherein updating (830) the image generating model comprises:

  obtaining a loss based on a distribution of the plurality of attributes and the predetermined distribution of the plurality of predetermined attributes; and
  updating the image generating model based on the loss.

14. The electronic device of claim 13, wherein the image generating model comprises a diffusion model and a distribution guidance parameter for adjusting the diffusion model, the distribution guidance parameter comprises a weight vector, and a plurality of weight in the weight vector corresponding to the plurality of predetermined attributes respectively, and obtaining the loss comprises:
determining the loss based on the weight vector, the distribution of the plurality of attributes, and the predetermined distribution of the plurality of predetermined attributes.

15. A non-transitory computer program product, the computer program product comprising a computer readable storage medium having program instructions embodied therewith, the program instructions executable by an electronic device to cause the electronic device to perform a method of any of claims 1 to 11.

100

110 PROMPT

A PHOTO OF A ROSE

120
IMAGE GENERATING MODEL

130 IMAGES

142 RED   140 WHITE   142 RED   140 WHITE

COLOR DISTRIBUTION

PREDETERMINED COLOR DISTRIBUTION

*FIG. 1*

200

220 PROMPT

A PHOTO OF A ROSE

210
IMAGE GENERATING MODEL

... 240 IMAGE

230 PREDETERMINED DISTRIBUTION

{1: 1, ...}

250 ATTRIBUTES

{RED, WHITE, ...}

*FIG. 2*

**300**

**210 IMAGE GENERATING MODEL**

**310 PROMPT**

A PHOTO OF [ XXX ]

**312 OBJECT**

**322**
DIFFUSION MODEL

**320 WEIGHT VECTOR**
$\{a_0, a_1, \ldots, a_{n-1}\}$

**330**
IMAGE

**350 DISTRIBUTION**

{ATT0, ATT1, ..., ATTN-1}

**340**
CLASSIFER

*FIG. 3*

**400**

**410 PROMPT**

A PHOTO OF A [ ROSE ]

**412 OBJECT**

**414 IMAGE**

**420 REGION OF INTEREST**

**430**
SIMILARITY (TEXT-IMAGE)

*FIG. 4*

**500A**

---

**Algorithm 1** Reinforcement Solver

---

**Input:** An initial distribution $\pi_A$ with parameters A, the Black-Box model Black-Box(), total iterations N, number of candidates K, update parameter $\eta$, loss threshold T.

**Output:** Updated parameters A.

1: **for** $t = 0, 1, \ldots, N - 1$ **do**     502
2:     Draw $K$ candidates from $a_0, \ldots a_{K-1} \sim \pi_{A_t}$.
3:     **for** $k = 0, 1, \ldots, K - 1$ **do**
4:         # According to Eq. 7 and Eq. 8     504
5:             Feed $a_k$ into the black box and obtain KL loss $E_{t,k}$.
6:             The reward is $R_{t,k} = exp(-E_{t,k})$
7:     **end for**
8:     Sum up: $\mathcal{E}(R_t) = \sum_k R_k \pi_A(a_k)$, $\mathcal{E}(E_t) = \sum_k E_{t,k}$
9:     # Stopping Criterion     506
10:     If $\mathcal{E}(E_t) < T$: **return** $A_t$
11:     # Calculate the policy gradient
12:     $\nabla_A \mathcal{E}(R_t) = \sum_{k=1}^{K} R_{t,k} \cdot \frac{\partial \pi_A(a_k)}{\partial A}$.
13:     # Update the parameters by the policy gradient     508
14:     $A_t = A_t + \eta \nabla_A R_t = A_t + \eta \sum_{k=1}^{K} R_{t,k} \cdot \frac{\partial \pi_A(a_k)}{\partial A}$.
15: **end for**

---

## FIG. 5A

**500B**

---

**Algorithm 2** Iterative Distribution Alignment

---

**Input:** The Black-Box model Black-Box(), total iterations N, update parameter $\alpha$, number of attributes n, loss threshold T.

**Output:** Desired $a$.

1: At $t = 0$, set all $a_i^{(0)} = 0$. Feed $a^{(0)}$ into the black box and obtain the frequency $s^{(0)}$.     512

2: At $t = 1$, set $a_i^{(1)} = \bar{s}_i^{(0)} - 1/n$. Feed $a^{(1)}$ into the black box and obtain the frequency $s^{(1)}$.     514

3: **for** $t = 2, \ldots, N - 1$ **do**
4:     # Residual Learning
5:     We set $a_i^{(t)} = a_i^{(t-1)} + \alpha * (\bar{s}_i^{(t-1)} - 1/n)$.
6:     We feed $a^{(t)}$ into the black box and obtain the frequency $s^{(t)}$ as well as the KL loss $E_t$.     516
7:     # Stopping Criterion
8:     If $(E_t) < T$: **return** $a^{(t)}$.
9: **end for**

---

## FIG. 5B

600

### 610 COLOR BIAS

|       | red  | white | KL     |
|-------|------|-------|--------|
| t=0   | 0.74 | 0.26  | 0.1200 |
| t=1   | 0.48 | 0.52  | 0.0008 |
| t=2   | 0.49 | 0.51  | 0.0002 |

### 620 TYPE BIAS

|       | I     | II    | III   | IV    | V     | VI    | KL    |
|-------|-------|-------|-------|-------|-------|-------|-------|
| t=0   | 0.384 | 0.242 | 0.061 | 0.040 | 0.141 | 0.131 | 0.238 |
| t=1   | 0.172 | 0.182 | 0.172 | 0.192 | 0.141 | 0.141 | 0.007 |
| t=2   | 0.192 | 0.172 | 0.162 | 0.172 | 0.152 | 0.152 | 0.003 |

## FIG. 6

700

710 IMAGE   714 IMAGE   712 IMAGE

724 YELLOW

720 RED

722 WHITE

COLOR DISTRIBUTION

## FIG. 7

800 ↘

810

| OBTAIN A PLURALITY OF IMAGES BY AN IMAGE GENERATING MODEL BASED ON A PROMPT, THE PLURALITY OF IMAGES COMPRISING A PLURALITY OF INSTANCES OF AN OBJECT, RESPECTIVELY, THE OBJECT BEING SPECIFIED BY THE PROMPT |

820

| DETERMINE A PLURALITY OF ATTRIBUTES OF THE PLURALITY OF INSTANCES OF THE OBJECT, RESPECTIVELY |

830

| UPDATE THE IMAGE GENERATING MODEL BASED ON THE PLURALITY OF ATTRIBUTES AND A PREDETERMINED DISTRIBUTION OF A PLURALITY OF PREDETERMINED ATTRIBUTES RELATED TO THE OBJECT |

*FIG. 8*

900 ↘

| PROCESSING UNIT | 910 | STORAGE UNIT | 930 |

| COMMUNICATION UNIT | 940 |

| MEMORY | 920 | INPUT DEVICE | 950 |

925

| PROGRAMS |

| OUTPUT DEVICE | 960 |

*FIG. 9*

Europäisches
Patentamt
European
Patent Office
Office européen
des brevets

# EUROPEAN SEARCH REPORT

**Application Number**

EP 25 19 5986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TERESA YEO ET AL: "Controlled Training Data Generation with Diffusion Models", ARXIV.ORG, CORNELL UNIVERSITY LIBRARY, 201 OLIN LIBRARY CORNELL UNIVERSITY ITHACA, NY 14853, 22 March 2024 (2024-03-22), XP091707902, * paragraph [03.1] - paragraph [03.3]; figures 1,2 * | 1-15 | INV. G06N3/0455 G06N3/0475 G06T11/00 G06V10/25 G06V10/74 |
| A | LAMPERT CHRISTOPH H ET AL: "Attribute-Based Classification for Zero-Shot Visual Object Categorization", IEEE TRANSACTIONS ON PATTERN ANALYSIS AND MACHINE INTELLIGENCE, IEEE COMPUTER SOCIETY, USA, vol. 36, no. 3, 1 March 2014 (2014-03-01), pages 453-465, XP011538956, ISSN: 0162-8828, DOI: 10.1109/TPAMI.2013.140 [retrieved on 2014-02-04] * paragraph [0002] - paragraph [0003] * | 9 | |

TECHNICAL FIELDS
SEARCHED (IPC)

G06N
G06V

The present search report has been drawn up for all claims

| Place of search | Date of completion of the search | Examiner |
|---|---|---|
| The Hague | 29 January 2026 | Falco, Gabriele |

EPO FORM 1503 03.82 (P04C01)